# EUROPÄISCHE PATENTSCHRIFT

(11) **EP 3 089 372 B1**
(45) Veröffentlichungstag und Bekanntmachung des Hinweises auf die Patenterteilung: **12.06.2019**
(21) Anmeldenummer: 15165220.3
(22) Anmeldetag: 27.04.2015
(51) Int. Cl.: H04B 3/54

(54) **ANORDNUNG UND VERFAHREN ZUR INTEGRIERTEN ÜBERTRAGUNG VON NACHRICHTEN ÜBER ELEKTROENERGIEVERSORGUNGSNETZE**
ASSEMBLY AND METHOD FOR INTEGRATED TRANSMISSION OF MESSAGES VIA ELECTRICAL ENERGY SUPPLY NETWORKS
DISPOSITION ET PROCÉDÉ DE TRANSFERT INTÉGRÉ D'INFORMATIONS AU MOYEN DE RÉSEAUX D'ALIMENTATION D'ÉNERGIE ÉLECTRIQUE

(43) Veröffentlichungstag der Anmeldung: 02.11.2016
(73) Patentinhaber: Deutsche Telekom AG, 53113 Bonn (DE)
(72) Erfinder: Lange, Christoph, 10318 Berlin (DE); Kosiankowski, Dirk, 15732 Eichwalde (DE)
(74) Vertreter: Vossius & Partner Patentanwälte Rechtsanwälte mbB

(56) Entgegenhaltungen:
- EP-A1- 2 464 027
- EP-A2- 2 341 636
- WO-A1-02/089353
- WO-A2-2005/046078
- DE-A1- 10 008 602

## Beschreibung

Die vorliegende Erfindung bezieht sich auf das Gebiet der Daten- und Telekommunikation. Im Speziellen betrifft die Erfindung die Übertragung von Nachrichten und Informationen über bestehende elektrische Leitungen in Gebäuden, die ursprünglich zum Zweck der Elektroenergieversorgung konzipiert und installiert wurden sowie die Integration dafür notwendiger Abschluss- und Übertragungseinrichtungen in Endgeräte. Demgemäß lehrt die vorliegende Erfindung eine Netzteilanordnung zum Empfang elektrischer Energie und eines Datensignals mitsamt einer analog ausgestalteten Netzanordnung zum Bereitstellen elektrischer Energie und eines Datensignals. Ferner sind entsprechende Verfahren gezeigt, die zum Betreiben der vorgeschlagenen Vorrichtungen eingerichtet sind.

Installationen zur Elektroenergieversorgung in Wohnungen und Häusern sind flächendeckend vorhanden und dienen überwiegend ausschließlich entsprechend ihrer ursprünglichen Bestimmung der Verteilung von Elektroenergie an direkt angeschlossene Verbraucher sowie an Steckdosen und daran angeschlossene Verbraucher in Wohnungen, Geschäfts- und anderen Räumen. Darüber hinaus lässt sich diese Infrastruktur auch zur Übertragung von Nachrichten nutzen, zum Beispiel zur Anbindung an das Internet und dazu notwendiger Kommunikation. Dazu wird im Frequenzmultiplex ein weiteres elektronisches Signal auf das Netz zum Beispiel im Hausverteilerkasten aufmoduliert.

Da eine Vielzahl von Geräten, die auch mit Kommunikationsanbindungen ausgestattet werden, einen 230-V-Anschluss an das Energieversorgungsnetz besitzen, zum Beispiel Radioempfänger, Fernsehgeräte oder Waschmaschinen, und dieser auch meist unverzichtbar ist, ist es vorteilhaft, eine in diesen Anschluss integrierte Kommunikationsanbindung bereitzustellen.

Bekannt sind in Gebäuden installierte Elektroenergieverteilnetze. Ebenso ist das Prinzip der *Powerline Communication PLC,* also der Übertragung von Informationen über ein Elektroenergieversorgungsnetz, bekannt.

Die DE 101 50 226 C1 zeigt eine Anordnung zum Anschluss einer Powerline-Datenübertragungseinrichtung oder eines Zwischenverstärkers an einen spannungsführenden Verteilerkasten eines Niederspannungs-Stromnetzes, bei der der Verteilerkasten mindestens eine Sammelschiene aufweist. Insbesondere beschreibt diese Druckschrift eine Anordnung mittels derer ganze Straßenzüge oder eine Vielzahl von Wohnungen mittels eines Powerline-Systems ausgestattet werden können.

Die AU 2009 251 115 A1 zeigt ein Kommunikationsmodul mitsamt Schaltkreisen und einem Mikrocontroller zum Versenden von Daten über eine bestehende Stromleitung.

Die WO 2004/030431 A2 zeigt ein Verfahren und ein System zum Übertragen von Kommunikationssignalen mittels eines Powerline-Systems. Hierbei wird auf die Störfaktoren der Datenleitung eingegangen und die Verwendung mehrerer Verstärker vorgeschlagen.

Die AU 2000 51 946 A1 zeigt ein Powerline-Kommunikationssystem und insbesondere die Koppelung eines Kommunikationssignals an eine Stromleitung, wobei das offenbarte Kommunikationssystem ohne eine Unterbrechung der elektrischen Versorgung von Endkunden installiert werden kann.

Die DE 100 08 602 A1 zeigt ein datenverarbeitendes Gerät mit einem Netzteil für eine interne Versorgung mit elektrischer Energie. Die elektrische Energie wird aus einem elektrischen Energieversorgungsnetz gespeist. Gemäß dieser Druckschrift ist eine Rechnerintelligenz notwendig. Das gezeigte datenverarbeitende Gerät weist ein Netzteil auf, das ein Powerline-Kommunikationsmodem bereits integriert hat. Die offenbarte technische Lehre sieht konsequent vor, sowohl eine Rechnerintelligenz als auch ein Modem in ein Netzteil zu integrieren. Hierbei wird eine Rechnerintelligenz durch eine Prozessorenkonfiguration mitsamt zugehöriger Software gebildet.

EP 2 464 027 A1 zeigt ein Stromversorgungskommunikationsgerät, das eine Stromversorgungsleitung als Signalübertragungsweg verwendet, mit: einem Halbleiterschaltelement, das auf einer mit der Stromleitung verbundenen elektrischen Schaltung vorhanden ist.

EP 2 341 636 A2 zeigt ein Netzteil, die in einem Computer installiert ist, um die Übertragung von Signalen zwischen dem Computer und mindestens einem elektrischen Gerät außerhalb des Netzteils zu ermöglichen, wobei das Netzteil eine elektrische Schnittstelle, mindestens ein Stromkabel, einen Tiefpassfilter, ein PLC-Modem, einen Wechselspannungswandler und einen Gleichspannungswandler aufweist.

WO 2005/046078 A2 zeigt ein Kommunikationssystem, das eine Stromversorgungskommunikation verwendet, die in einem Gebäude mit einer Vielzahl von Häusern durchgeführt wird, in denen ein Video- und Audiosignal in einem Hochfrequenzband, wie beispielsweise TV- oder CATV-Signale, gemeinsam empfangen wird, in einer solchen Weise vorgesehen, dass die Stromleitung und die Kommunikationsleitung miteinander kombiniert werden, um einen Signalübertragungsweg zu bilden.

WO 02/089353 A1 betrifft die Verwendung einer Vorrichtung zum elektrischen Verbinden eines Modems zum Zuführen von Daten zur netzbasierten Datenübertragung in einer mit Stromleitungen verbundenen Verteilungseinrichtung.

Bekannt sind weiterhin PLC-Verfahren, die im Frequenzmultiplex eine Ethernet-basierte Kommunikation über das Elektroenergieversorgungsgebäudenetz ermöglichen.

Dazu wird ein Zusatzmodul, üblicherweise ein Durchgangssteckdosenmodul, verwendet, mit dem man eine Spannung von 220/230 V zur Elektroenergieversorgung an das betreffende Gerät durchleitet. In dem Gerät ist ein Kommunikationsmodul vorgesehen, das das Ethernet-Signal ausgekoppelt, also vor dem Endgerät, zum Beispiel einem Radiogerät, einem Fernsehgerät oder einer Waschmaschine.

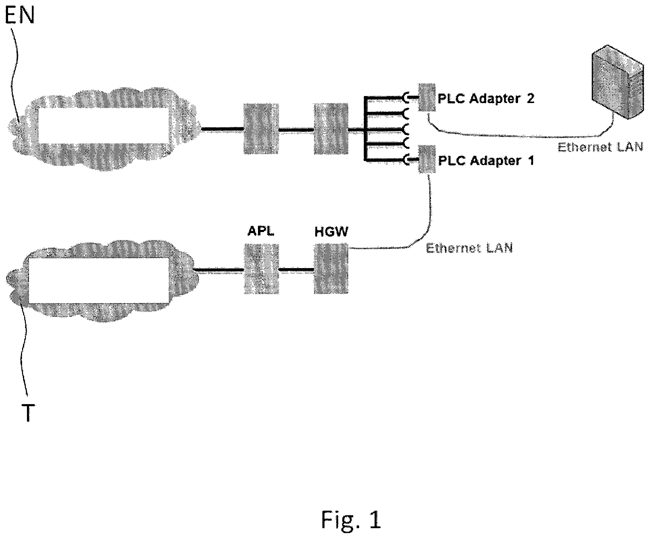

Fig. 1 zeigt eine Anordnung entsprechend dem Stand der Technik bezüglich eines Einphasen-Wechselstroms als ein Anwendungsszenario der vorliegenden Erfindung. Die Elektroenergie erreicht die Steckdose und damit den angeschlossenen Verbraucher über folgende Instanzen: Aus dem Energieversorgungsnetz EN wird über den Hausanschluss und den Elektrozähler der Hausverteiler erreicht, von dem aus über die im Haus bzw. der Wohnung installierten Leitungen die einzelnen Steckdosen und Verbraucher angeschlossen sind. Das Kommunikationssignal, zum Beispiel zum Breitband-Internet-Anschluss, erreicht aus dem Telekommunikationsnetz T über den Abschlusspunkt der Linientechnik (APL) den Heimnetzknoten, das sogenannte Home Gateway (HGW). Um nun ein Gerät, zum Beispiel einen PC, wie dargestellt an das Telekommunikationsnetz über PLC anschließen zu können, sind meist zwei Umsetzer, bzw. PLC-Adapter, notwendig: Einmal auf der Seite des HGWs, um das Kommunikationssignal geeignet für die PLC-Übertragung aufzubereiten und zum Beispiel in die richtige Frequenzlage umzusetzen, siehe PLC-Adapter 1, und auf der Seite des PCs, um diese Umsetzung wieder rückgängig zu machen und das Signal für den PC in eine geeignete Form zu bringen, siehe PLC-Adapter 2. Alle diese Merkmale des Anwendungsszenarios können mit den erfindungsgemäßen Vorrichtungen zum Bereitstellen oder Versenden von Datensignalen zusammenwirken.

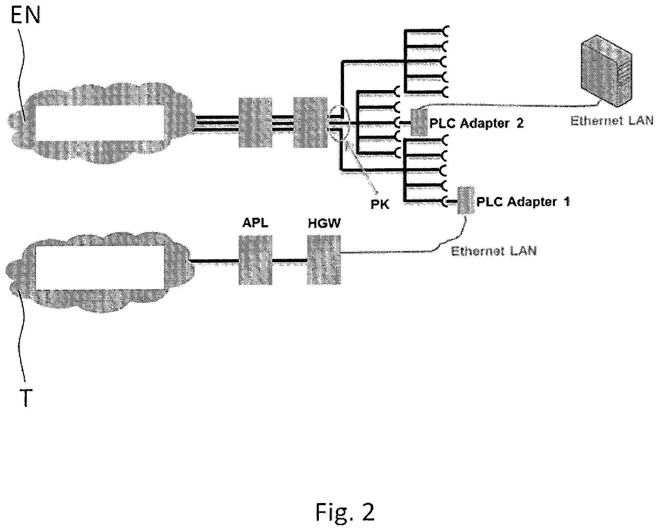

Ein sinngemäßes Bild zum Stand der Technik für eine Ausführung mit DreiphasenWechselstrom zeigt Fig. 2 als ein Anwendungsszenario der vorliegenden Erfindung.

Bekannte Verfahren und Anordnungen haben den Nachteil, dass diese unnötigerweise mindestens zwei Kabel und diverse Netzwerkkomponenten vorsehen. So wird gemäß herkömmlicher PLC-Verfahren ein Netzteil vorgesehen, welches bereits ein integriertes PLC-Modem aufweist, welches zwischen Steckdose und Endgerät eingesteckt wird. Somit ist es gemäß herkömmlicher Anordnungen nicht möglich, auf kostengünstige Weise PLC-Adapter in ein Endgerät zu integrieren. Zwar zeigt der Stand der Technik integrierte PLC-Adapter, diese sind aber stets derart ausgestaltet, dass typischerweise alle Komponenten in einem einzelnen Gerät integriert sind. Beispielsweise ist es ein Nachteil, ein Netzteil mitsamt einem integrierten Modem bereitzustellen, da hierbei das Netzteil mit der eingebetteten Logik des PLC-Modems unteilbar verbunden ist. So ist es gegenüber dem Stand der Technik besonders wünschenswert, eine Anordnung bereitzustellen, die zwar in ein Endgerät, wie z.B. ein TV-Gerät, integrierbar ist, wobei jedoch das Netzteil von der Datenübertragung derart abgekoppelt ist, dass die einzelnen Komponenten auch austauschbar sind.

Es ist somit eine Aufgabe der vorliegenden Erfindung, den beschriebenen Stand der Technik derart zu verbessern, dass die zusätzlichen Umsetzer auf der Hausanschlussseite und der Seite der Vielzahl von Geräten nicht als separate Geräte benötigt werden, sondern eine integrierte Lösung geschaffen wird.

Diese Aufgabe wird erfindungsgemäß durch eine Netzteilanordnung mit den Merkmalen des Patentanspruchs 1 gelöst. Bevorzugte Weiterbildungen sind in den abhängigen Ansprüchen angegeben.

Demgemäß ist eine Netzteilanordnung zum Empfang elektrischer Energie und eines Datensignals vorgesehen. Hierbei ist das Netzteil eingerichtet zum Empfang elektrischer Energie und eines modulierten Datensignals über eine Stromleitung. Ferner ist ein an das Netzteil gekoppeltes Kommunikationsmodul vorgesehen, welches das auf die Stromleitung modulierte Datensignal demoduliert, wobei das Kommunikationsmodul zwischen dem Netzteil an einem stromabnehmenden Endgerät vorgesehen ist.

Die vorliegende Erfindung sieht ein Netzteil vor, welches beispielsweise gemäß einem Powerline-Kommunikationsverfahren sowohl elektrische Energie als auch ein Datensignal empfängt. Somit wird eine Trägerfrequenzanlage bereitgestellt, die ein Datensignal, das von dem Netzteil empfangen wird, mittels eines Netzwerkmoduls auf eine bestehende Stromleitung moduliert. Dies kann beispielsweise gemäß einem Funktionsprinzip eines Modems erfolgen. Hierzu kann beispielsweise das Übertragungsverfahren namens "orthogonal frequency-division multiplexing" (OFDM) Anwendung finden. Beispielsweise wird auf der Sendeseite eine Vielzahl von Signalen gleichzeitig auf Trägerfrequenzphasen und -amplituden moduliert. Je nach Übertragungsstandard kann das zur Verfügung stehende Frequenzspektrum dabei in Kanäle aufgeteilt werden, um die Störanfälligkeit zu verringern. Ferner können Fehlerkorrektur- und Interleaving-Verfahren Anwendung finden. Weiter können zur Signalüberbrückung zwischen zwei Phasen sogenannte Phasenkoppler vorgesehen sein.

Somit kann das beschriebene Netzteil an eine herkömmliche Stromleitung angeschlossen werden. Über die Stromleitung wird ein elektrisches Signal übertragen, das aus dem Energieversorgungssignal (beispielsweise mit 50 Hz) und dem Datensignal bei einer höheren Frequenz (entsprechend PLC-Standard) besteht. Die in dem Datensignal enthaltene Information wird auf eine entsprechende Trägerfrequenz aufmoduliert und dann, wie erwähnt, im Frequenzmultiplex über die Stromleitung übertragen. Das Signal wird nunmehr von dem Netzteil empfangen und an ein Kommunikationsmodul durchgereicht. Das Kommunikationsmodul ist derart an das Netzteil gekoppelt, dass es von dem Netzteil nicht nur durch elektrische Energie bzw. Spannung versorgt wird, sondern dass das Kommunikationsmodul auch das modulierte Datensignal erkennen und demodulieren kann. Somit erfolgt ein Abtrennen des Datensignals vom außerdem auf der Stromleitung übertragenen Energieversorgungssignal. Das Datensignal kann nunmehr an weitere Netzwerkkomponenten bereitgestellt werden. Beispielsweise kann das Datensignal an eine Steuereinheit eines Endgeräts bereitgestellt werden, um somit Funktionen des Endgeräts auszulösen. Somit ist es erfindungsgemäß vorgesehen, neben einer Vielzahl bekannter Anwendungsszenarien, beispielsweise auch ein Datensignal einem beliebigen Haushaltsgerät, z.B. einem Kühlschrank, einer Lampe oder einem Trockner, bereitzustellen.

Erfindungsgemäß ist es somit möglich, ein Netzteil auszuliefern, an welches das Kommunikationsmodul gekoppelt ist. Hierbei ist es besonders vorteilhaft, dass das Netzteil und das Kommunikationsmodul separat austauschbar sind. Somit wird kein einteilig ausgeformtes Netzteil ausgeliefert, sondern es ist eine Netzteilanordnung vorgesehen, wobei bezüglich eines Netzteils mehrere Varianten, beispielsweise mit unterschiedlichen Wattzahlen, vorgesehen sein können und ferner, hiervon getrennt, diverse Kommunikationsmodule, welche jeweils eine geeignete Steuersoftware aufweisen. Somit ist es erfindungsgemäß möglich, einem Endkunden ein Netzteil mitsamt einem Kommunikationsmodul bereitzustellen, wobei das Kommunikationsmodul je nach Bedarf ausgetauscht werden kann. Liegt beispielsweise das Kommunikationsmodul als eine Weiche vor, so kann auf einfache Weise diese Weiche ausgetauscht werden ohne hierbei das Netzteil wechseln zu müssen. Dennoch ist das Netzteil mitsamt dem Kommunikationsmodul einfach in ein bestehendes Endgerät einzubauen und ist aufgrund der erfindungsgemäßen Anordnung im Inneren eines Endgeräts zu platzieren. Somit entfallen für den Endkunden Netzwerkkomponenten, welche beispielsweise in eine Steckdose eingesteckt werden und das Datensignal dann mittels eines Ethernet-Kabels an das Endgerät bereitstellen.

Auch ist es erfindungsgemäß möglich, dass das Netzteil mehrere Stromauslässe anbietet, wobei das Kommunikationsmodul lediglich an einen Stromauslass gekoppelt ist. Somit ist es erfindungsgemäß möglich, dass beispielsweise bei einem herkömmlichen Rechner ein Netzteil eingebaut wird, das mehrere Stromanschlüsse bereitstellt, welche mit einem Laufwerk oder einem Motherboard verbunden werden können, und einen separaten Stromauslass, welcher an das Kommunikationsmodul gekoppelt ist. Somit ist es erfindungsgemäß möglich, mittels des Kommunikationsmoduls elektrische Energie durchzuleiten, wobei jedoch das Datensignal abgetrennt und gesondert bereitgestellt wird.

Gemäß einem Aspekt der vorliegenden Erfindung entspricht das Datensignal einem Ethernet-Standard. Dies hat den Vorteil, dass bestehende Protokolle wieder- bzw. weiterverwendet werden können. Somit ist keine Anpassung weiterer Geräte, welche bisher auch im Ethernet-Standard kommunizieren, notwendig. Bestehende Protokolle und Netzwerkkomponenten können somit auch mit der erfindungsgemäßen Netzteilanordnung kommunizieren.

Gemäß einem weiteren Aspekt der vorliegenden Erfindung sind das Netzteil, das Kommunikationsmodul und das stromabnehmende Endgerät in einem Gehäuse integriert. Dies bietet den Vorteil, dass die vorliegende Netzteilanordnung mitsamt einem stromabnehmenden Endgerät als ein Produkt ausgeliefert werden kann. Beispielsweise kann ein Gehäuse als ein Radiogehäuse vorliegen, in welches die erfindungsgemäße Netzteilanordnung mitsamt einem Radioempfänger und Kommunikationsschnittstellen integriert ist. Hierbei erkennt der Fachmann diverse weitere Ausgestaltungen eines Gehäuses, beispielsweise das einer Waschmaschine, eines Trockners oder eines Fernsehgeräts.

Gemäß einem weiteren Aspekt der vorliegenden Erfindung steuert eine Steuereinheit das stromabnehmende Endgerät mittels des Datensignals an. Dies hat den Vorteil, dass beispielsweise eine Steuereinheit, welche bezüglich der Netzteilanordnung extern angeordnet ist, Steuersignale bereits über die Stromleitung an das stromabnehmende Endgerät überträgt. So kann beispielsweise eine Kühlschrankinformation, wie beispielsweise eine Temperatureinstellung, mittels des Stromnetzes an einen Kühlschrank übertragen werden. Hierbei werden netzwerkseitig Kommunikationsprotokolle implementiert, welche das Übertragen von Konfigurationsdaten an das Endgerät ermöglichen.

Gemäß einem weiteren Aspekt der vorliegenden Erfindung wird die Steuereinheit durch mindestens einen Server gebildet. Dies hat den Vorteil, dass speziell eingerichtete Anbieter Endgeräte, beispielsweise gemäß einem Smart-Home Anwendungsszenario, ansteuern können. Somit können Dienstanbieter eine Steuerungslogik anbieten, die über das Netzwerk auf einfache Weise an die Endgeräte übertragen wird.

Gemäß einem weiteren Aspekt der vorliegenden Erfindung liegt das Kommunikationsmodul als eine Weiche vor. Dies hat den Vorteil, dass die Netzteilanordnung selbst keine Rechnerintelligenz aufweisen muss, sondern dass lediglich einfach zu implementierende Hardwaremodule Anwendung finden können. Hierbei ist es erfindungsgemäß möglich, dass die Weiche ohne einen Prozessor bzw. eine Steuerungssoftware auskommt. Diese kann beispielsweise als eine speziell eingerichtete Schaltung bereitgestellt werden.

Gemäß einem weiteren Aspekt der vorliegenden Erfindung liegt das stromabnehmende Endgerät als ein Radio, ein Fernsehgerät, ein Kühlschrank, eine Waschmaschine, ein Trockner, eine Lampe oder als ein Rechner bzw. Computer vor. Dies hat den Vorteil, dass eine Vielzahl von Endgeräten mit der erfindungsgemäßen Netzteilanordnung ausgestattet werden kann.

Die vorliegende Aufgabe wird ebenfalls gelöst durch eine Netzwerkanordnung zum Bereitstellen elektrischer Energie und eines Datensignals gemäß einem weiteren nebengeordneten Patentanspruch.

Demgemäß wird eine Netzwerkanordnung zum Bereitstellen elektrischer Energie und eines Datensignals vorgeschlagen, aufweisend eine Energiequelle zum Bereitstellen elektrischer Energie über eine Stromleitung sowie ein an das Netzmodul gekoppeltes Kommunikationsmodul, welches ein Datensignal auf die Stromleitung moduliert, wobei das Kommunikationsmodul zwischen der Energiequelle und einer Mehrzahl an Steckdosen vorgesehen ist.

Somit ist es möglich, in ein bestehendes Elektroenergieverteilnetz eines Hauses die erfindungsgemäße Netzwerkanordnung derart einzubringen, dass diese für den Endbenutzer nicht sichtbar ist. Dies heißt beispielsweise, dass die Netzwerkanordnung Unterputz derart zwischen der Energiequelle und einer Mehrzahl an Steckdosen installiert werden kann, dass mittels einer geeigneten Schnittstelle des Kommunikationsmoduls sowohl Datensignale als auch elektrische Energie von dem Kommunikationsmodul empfangen werden können. Das Kommunikationsmodul reicht nunmehr die elektrische Energie an die Steckdose durch und moduliert gleichzeitig das empfangene Datensignal auf. Somit wird an einer Mehrzahl von herkömmlichen Steckdosen nicht wie bekannt lediglich Strom bereitgestellt, sondern die Stromleitung, welche die Steckdose versorgt, stellt auch das modulierte Datensignal bereit. Dies ist insbesondere deshalb vorteilhaft, da bereits in einem Verteilerkasten das erfindungsgemäße Kommunikationsmodul derart eingebaut werden kann, dass an allen Steckdosen in einem Haushalt das modulierte Datensignal abgreifbar ist. Somit muss nicht wie in bekannten Verfahren ein externer Adapter an eine herkömmliche Steckdose angeschlossen werden, sondern das Aufmodulieren des Datensignals erfolgt bereits zwischen der Energiequelle und der Mehrzahl an Steckdosen, beispielsweise eines Gebäudes. Somit sind herkömmliche Energieversorgungsnetze eines Gebäudes in einfacher Weise nachrüstbar.

In die Steckdose wird nunmehr ein Stromkabel eingesteckt, das beispielsweise ein Endgerät mit der erfindungsgemäßen Netzteilanordnung gemäß Patentanspruch 1 versorgt. Somit wird ein moduliertes Datensignal an den Steckdosen bereitgestellt, das mittels lediglich eines Stromkabels an ein stromabnehmendes Endgerät übermittelt wird. Dieses stromabnehmende Endgerät kann nun mittels der erfindungsgemäßen Netzteilanordnung nicht nur lediglich den Strom abgreifen, sondern auch das modulierte Datensignal demodulieren und somit Steuerungsinformationen entnehmen. Dies ist besonders vorteilhaft, da in der gesamten Netzwerkanordnung keinerlei Adapter Verwendung finden müssen, welche erst auf die Steckdose aufgesteckt bzw. einem Endgerät vorgeschaltet werden.

Gemäß einem Aspekt der vorliegenden Erfindung ist das Kommunikationsmodul mit einem Telekommunikationsnetz verbunden. Dies hat den Vorteil, dass das Kommunikationsmodul nicht nur von der Energiequelle die Energie bereitgestellt bekommt, sondern an einem zentralen Punkt im Netzwerk auch das Datensignal mittels des Telekommunikationsnetzes bereitgestellt bekommt. Das Kommunikationsmodul kann nunmehr das Datensignal auf die Stromleitung aufmodulieren und beispielsweise an alle Steckdosen eines Gebäudes weiterleiten.

Gemäß einem weiteren Aspekt der vorliegenden Erfindung ist das Kommunikationsmodul an einen Hausverteiler gekoppelt. Dies hat den Vorteil, dass ein bestehendes Energieversorgungsnetz mit wenig Aufwand derart erweitert werden kann, dass an allen Steckdosen des Energieversorgungsnetzwerkes ein moduliertes Datensignal bereitgestellt werden kann.

Gemäß einem weiteren Aspekt der vorliegenden Erfindung ist das Kommunikationsmodul in einen Verteilerkasten integriert. Dies hat den Vorteil, dass bereits aufgerüstete Verteilerkästen zur Montage bereitgestellt werden können, welche mittels angeschlossener Netzwerktechnik das Datensignal an die Steckdosen bereitstellen kann.

Gemäß einem Aspekt der vorliegenden Erfindung ist die Mehrzahl an Steckdosen ortsfest in mindestens ein Gebäude eingebracht. Dies hat den Vorteil, dass bestehende Installationen einfach erweitert werden können und die erfindungsgemäße Netzwerkanordnung in einem bestehenden Energieversorgungssystem nachgerüstet werden kann.

Gemäß einem Aspekt der vorliegenden Erfindung liegt das Kommunikationsmodul als eine Weiche vor. Dies hat den Vorteil, dass die erfindungsgemäße Netzwerkanordnung einfach und Kostengünstig bereitgestellt werden kann, da keine Recheneinheit verbaut werden muss. Zusätzlich minimiert eine einfache Weiche die Fehleranfälligkeit im Vergleich zu bestehenden komplexeren Systemen.

Die Aufgabe wird ebenfalls gelöst durch ein Verfahren zum Empfangen bzw. zur Aufnahme elektrischer Energie und eines Datensignals, mit dem Schritt Empfangen elektrischer Energie und eines modulierten Datensignals mittels eines Netzteils über eine Stromleitung. Weiterhin ist ein Demodulieren des Datensignals mittels eines an das Netzteil gekoppelten Kommunikationsmoduls vorgesehen, wobei das Kommunikationsmodul zwischen dem Netzteil und einem stromabnehmenden Endgerät vorgesehen ist. Somit ist das vorgeschlagene Verfahren geeignet zum Betreiben der Netzteilanordnung gemäß dem Patentanspruch 1.

Das mit einer Kommunikationsverbindung zu versorgende Gerät, zum Beispiel Radiogerät, Fernsehgerät, Kühlschrank, Waschmaschine, enthält erfindungsgemäß schon ein Kommunikationsmodul, das bei Anschluss des Geräts an die Steckdose unmittelbar mit angeschlossen wird. Im Gerät ist eine Weiche, die das 220/230-V-Signal und das Kommunikationssignal (Ethernet) trennt. Das Ethernet-Signal wird im Gerät in einem integrierten Kommunikationsmodul verarbeitet, der Nutzer braucht nichts weiter zu tun. Im Verteilerkasten ist beispielsweise ein Master-PLC-Modul vorgesehen, das eine Kommunikationsnetzanbindung aufweist, zum Beispiel über den Heimnetzknoten (HGW). Somit sind erfindungsgemäß alle Stromkreise im Haus für integrierte Powerline-Übertragung vorbereitet und ausgerüstet. Insgesamt erfolgt damit eine Integration der Powerline-Kommunikationstechnik in eine bestehende Kabel- und Stecker-Infrastruktur der Elektroenergie-Versorgungsinstallation.

Somit wird erfindungsgemäß auf eine stabile, üblicherweise bestehende Festnetzverdrahtung (Haus-/Wohnungs-Energieversorgungsnetz) zurückgegriffen, ohne Extra-Leitungen und Extra-Geräte/-Umsetzer für eine Powerline-Kommunikation zu benötigen, was zu einer Einsparung von PLC-Adaptern führt. Da typischerweise fast jedes Gerät über einen 220/230-V-Anschluss verfügt, ist eine Mitnutzung (inhärent) als Kommunikationsverbindung von großem Wert im Sinne der Vereinfachung der Gesamtinstallation. Man benötigt zum Beispiel keine Extra-Bluetooth-, ZigBee, Z-Wave oder WLAN-Verbindung oder ein Extra-LAN-Kabel zur Kommunikationsanbindung von Geräten, die über eine Anbindung an die Elektroenergieinstallation im Haus bzw. in einer Wohnung über zum Beispiel einen Steckdose verfügen. Es wird erfindungsgemäß kein WLAN, Bluetooth, ZigBee, usw. für Datennetzanbindung benötigt. Dies ist insbesondere auch dann von Wert, wenn der Nutzer keine Funksignale in seiner Umgebung möchte (WLAN, Bluetooth) bzw. deren Einfluss minimieren möchte und außerdem kein zusätzliches Ethernetkabel verlegt werden soll oder kann.

Zudem kann ein integriertes Sicherheitskonzept mittels der erfindungsgemäßen Lösung konstruiert werden, bei dem eine gesicherte Kommunikation nur mit einem Rechenzentrum etabliert wird und von dort eine sichere Verbindung, zum Beispiel IPSec-Tunnel, zu Drittanbieter des betreffenden Gerätes, zum Beispiel eines Kühlschranks, aufgebaut wird. Auch die Steuerung weiterer Geräte und Aktoren im Haus, zum Beispiel Lampen, ist ohne Funkverbindung (WLAN, Bluetooth, Z-Wave, ZigBee) möglich, was die Nutzung der erfindungsgemäßen Lösung im Smart Home Umfeld wesentlich erleichtert. Jedes Gerät, das einen 230-V-Anschluss hat, kann kommunizieren oder gesteuert werden.

Die erfindungsgemäße Anordnung und Lösung erfordert lediglich gemäß einem Aspekt der vorliegenden Erfindung eine zentrales Master PLC Modul, das vorzugsweise im Strom-Verteilerkasten eines Hauses oder Gebäudes untergebracht ist. Dieses sollte nach DIN EN60715 (alt: DIN EN 50022 ... 50024, DIN EN 50035 und DIN EN 50045; DIN-Hutschiene oder Tragschiene (DIN-Rail)) auf der Hutschiene des Verteilerkastens untergebracht werden und mit allen im Haus oder Gebäude verwendeten Phasen (1P oder 3P) verbunden sein, um die entsprechenden PLC-Modulationsdaten auf allen Phasen übertragen zu können, ggf. mit Phasenkoppler. Dabei unterstützt das Master-PLC-Modul zur Kommunikation mit den Geräten im Haushalt oder in Gebäuden lediglich gemäß einem Aspekt der vorliegenden Erfindung alle bekannten und standardisierten Trägerfrequenzverfahren, zum Beispiel PowerLAN, dLAN, Homeplug, Homeplug Turbo, Homeplug AV, IEEE 1901.2 Low-Frequency, Narrow-Band Powerline Communications.

Auf der netzseitigen Kommunikation kommt lediglich gemäß einem Aspekt der vorliegenden Erfindung Ethernet nach IEEE 802.3, z.B. Fast Ethernet, Gigabit Ethernet, zum Einsatz. Das Master PLC Modul wird damit direkt mit dem Home Gateway (DSL-Router, Kabel-Modem, Glasfaser-ONT) verbunden und erhält somit über die Anbindung an das Telekommunikationsnetz des jeweiligen Anbieters die Möglichkeit der weltweiten Kommunikation. Möglich ist auch die Platzierung (Integration) des Master PLC Moduls direkt im HGW. Bei 3-Phasen-Wechselstrom ist lediglich gemäß einem Aspekt der vorliegenden Erfindung ein Phasenkoppler zur Verbesserung der Übertragung auf alle Phasen im Verteilerkasten der Hausstromverkabelung vorzusehen.

Diese Lösung gemäß der vorliegenden Erfindung funktioniert damit ohne die üblichen Adapter (Modems) zur Einspeisung bzw. Einkopplung und Auskopplung der Daten auf/aus den Stromleitungen des Hauses oder Gebäudes.

Die Erfindung wird nunmehr anhand beispielhafter Ausgestaltungen beschrieben. Es zeigen:
- Fig. 1: ein Anwendungsszenario der vorliegenden Erfindung gemäß dem Stand der Technik mit einem 1-Phasen-Wechselstrom;
- Fig. 2: ein weiteres Anwendungsszenario der vorliegenden Erfindung gemäß dem Stand der Technik mit einem 3-Phasen-Wechselstrom;
- Fig. 3: eine schematische Darstellung eines Master-PLC-Adapters in einem Hausanschluss gemäß einem Aspekt der vorliegenden Erfindung;
- Fig. 4: eine schematische Darstellung eines Master-PLC-Adapters in einem Home Gateway gemäß einem Aspekt der vorliegenden Erfindung; und
- Fig. 5: eine vorteilhafte Netzteilanordnung gemäß einem Aspekt der vorliegenden Erfindung.

Figuren 1 und 2 zeigen Anwendungsszenarien der vorliegenden Erfindung und wurden bereits beschrieben.

Die erfindungsgemäße Anordnung wird anhand mehrerer Ausführungsbeispiele im Folgenden detailliert erklärt. Als Anwendungsmöglichkeiten sind erfindungsgemäß u. a. folgende Szenarien möglich:
- Steuerung der Helligkeit von Leuchten (niedrige Bitrate)
- Übertragung von Kühlschrankinhaltsinformationen an Lieferdienste
- Datennetzanbindung für Kommunikationsgeräte, zum Beispiel PC, Fernsehgerät (hohe Bitrate)
- Direkter Kommunikationsanschluss für Internetradio
- Steuerung von Haushaltsgeräten, zum Beispiel Waschmaschine, Trockner
- Steuerung von (einem Energieversorgungsunternehmen aus der Ferne über gesicherte Verbindungen) zum Beispiel von Wärmepumpen und Photovoltaik-Anlagen zur Nutzung von Strompreisunterschieden bzw. Stabilisierung des Stromnetzes (Ausregeln von Angebot und Nachfrage bei dezentraler Einspeisung und Verbrauch)

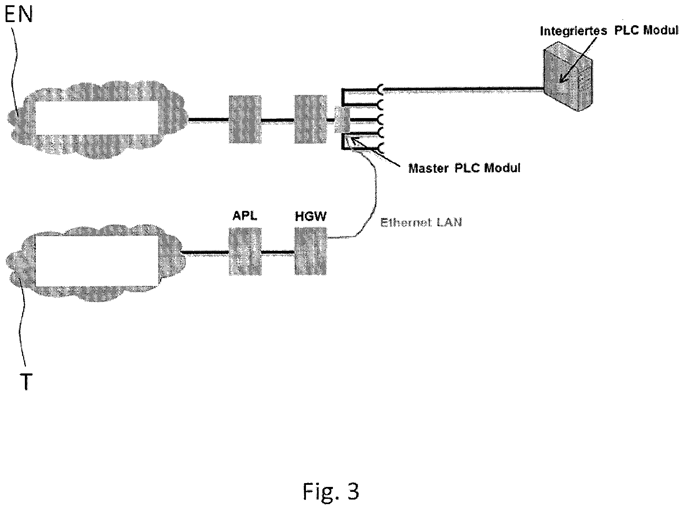

In einem weiteren Ausführungsbeispiel ist ein Master-PLC-Modul im Hausanschluss vorgesehen. Fig. 3 zeigt schematisch eine Anordnung und damit das Wirkprinzip gemäß der vorliegenden Erfindung: Es ist nun im Hausverteiler ein PLC-Adapter eingefügt ("Master-PLC-Adapter"). Dieser ist lediglich gemäß einem Aspekt der vorliegenden Erfindung so ausgeführt, dass er das gesamte Hausinstallationsnetz mit Kommunikationssignalen versorgt, da alle Steckdosen damit verbunden sind. Seinerseits benötigt dieser eine Datennetzanbindung. Diese ist in diesem Ausführungsbeispiel über ein Ethernet-LAN-Kabel realisiert. Der Verbraucher, hier ein PC, ist über das Elektroverteilnetz angeschlossen. Über diesen wird es mit Elektroenergie und (über PLC) mit dem Kommunikationssignal versorgt. Um beide Signale zu trennen, ist im Gerät (PC) ein PLC-Adapter integriert, der das Kommunikationssignal in ein für den PC geeignetes Format umsetzt.

In einem weiteren Ausführungsbeispiel ist ein Master-PLC-Modul in einem Home Gateway vorgesehen.

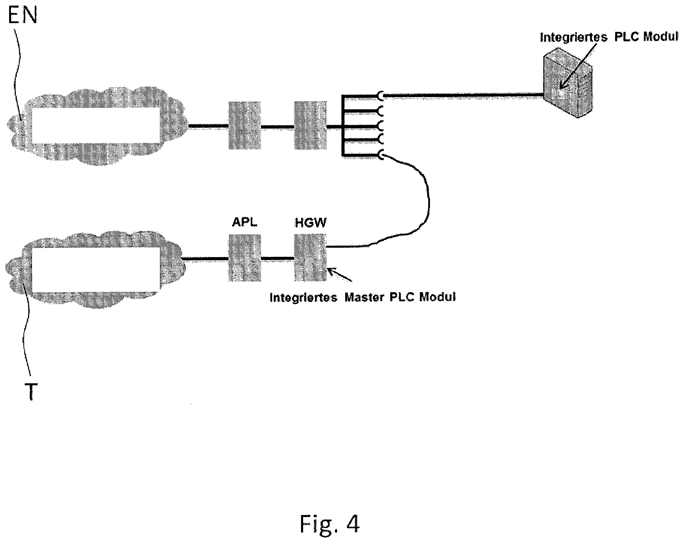

Fig. 4 zeigt schematisch eine weitere Anordnung entsprechend des Wirkprinzips der vorliegenden Erfindung: Es ist nun der Master-PLC-Modul in das Home Gateway integriert. Da das Home Gateway über einen Stromanschluss zum Hauselektroenergieverteilnetz hin verfügt, kann nun diese Verbindung mit als Kommunikationsverbindung genutzt werden. Die Anbindung des Master-PLC-Adapters kann über ein zusätzliches Ethernet-LAN-Kabel entfallen. Die Anordnung und Verarbeitung auf der Geräteseite (im Beispiel der PC) bleibt wie in anderen Ausführungsbeispielen.

Die vorliegende Erfindung kann sowohl für Ein- als auch für Dreiphasenwechselstrom (ggf. mit Phasenkoppler) genutzt werden.

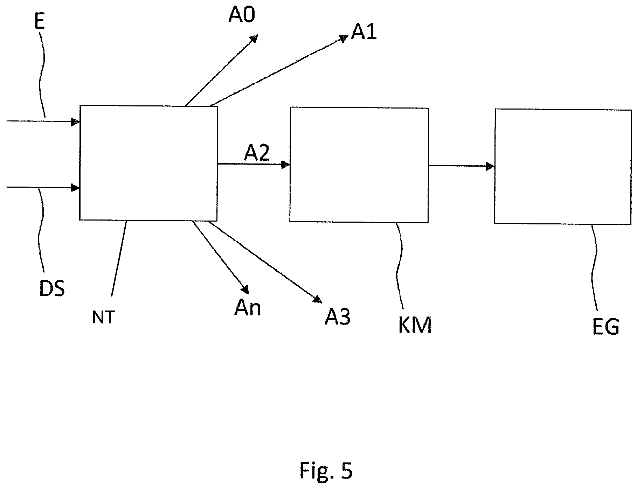

Fig. 5 zeigt eine erfindungsgemäße Netzteilanordnung mit einem Netzteil NT, welches elektrische Energie E über eine Stromleitung empfängt, die ebenfalls ein aufmoduliertes Datensignal DS bereitstellt. In der vorliegenden Fig. 5 sind die Eingänge für die elektrische Energie E und das modulierte Datensignal DS mittels zweier Pfeile gezeigt. Typischerweise handelt es sich hierbei physisch um eine einzige Stromleitung. Optional weist das Netzteil NT mehrere Anschlüsse A0, A1, A2, ..., An auf.

In einer weiteren erfindungsgemäßen Ausgestaltung kann jedoch auch nur ein einziger Stromauslass vorgesehen sein. Dies ist beispielsweise der Stromauslass A2. Diese Auslasse bzw. Anschlüsse sind erfindungsgemäß mit einem Kommunikationsmodul KM verbunden. In der vorliegenden Fig. 5 ist dies lediglich für ein Kommunikationsmodul KM gezeigt. Es ist jedoch hierbei auch möglich, an die weiteren Anschlüsse A0 und A1 ebenfalls ein weiteres Kommunikationsmodul KM anzuschließen. Das Kommunikationsmodul KM empfängt nunmehr die elektrische Energie E und stellt sie dem Endgerät EG bereit. Hierbei ist das Kommunikationsmodul KM eingerichtet, das modulierte Datensignal DS der Stromleitung zu entnehmen. Hierzu kann es notwendig sein, dass das Netzteil nicht nur die Energie der Stromleitung weiterverteilt, sondern auch das aufmodulierte Datensignal an das Kommunikationsmodul KM durch leitet. Somit dient das Kommunikationsmodul als ein Zwischenadapter zwischen dem Netzteil NT und dem Endgerät EG.

Diese erfindungsgemäße Netzteilanordnung ist besonders vorteilhaft, da herkömmliche Geräte mit wenig Aufwand aufgerüstet werden können. So ist es beispielsweise möglich, ein herkömmliches Netzteil NT zu verwenden und dies mit dem erfindungsgemäßen Kommunikationsmodul auszurüsten und eben dieses Kommunikationsmodul KM zwischen dem Netzteil NT und dem Endgerät NG vorzusehen. Gemäß einem weiteren Beispiel ist es möglich, dass das Netzteil NT, das Kommunikationsmodul KM und das Endgerät EG in einem einzigen Gehäuse untergebracht sind. Somit ist es erfindungsgemäß möglich, ein Gerät bereitzustellen, welches bereits mit der erfindungsgemäßen Netzteilanordnung ausgestattet ist. So kann das in Fig. 5 gezeigte Netzteil NT, das Kommunikationsmodul KM und das Endgerät EG das Innenleben eines Radios darstellen, wobei das Endgerät ein Radioempfänger mitsamt Benutzerschnittstelle ist. Somit kann mittels einer Stromleitung nicht nur elektrische Energie E, sondern auch ein Musikstreaming in Form eines Datensignals DS an das Radio bereitgestellt werden. Hierzu empfängt das Netzteil NT die elektrische Energie und leitet sie mittels des Kommunikationsmoduls KM an das Endgerät, beispielsweise die Empfangselektronik, weiter. Außerdem reicht das Netzteil NT das Datensignal DS an das Kommunikationsmodul KM durch, welches nunmehr das Datensignal DS demoduliert und Pakete gemäß einem Internetprotokoll an das Endgerät weiterreicht. Generell kann das Kommunikationsmodul KM als eine Weiche vorliegen, oder als ein Wandler, der Datensignale DS in Datenpakete umwandelt. Somit demoduliert das Kommunikationsmodul die Datensignale DS und stellt eine bestimmte Datenmenge bzw. eine Steuerungsinformation an das Endgerät bereit.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Netzteilanordnung zur Aufnahme elektrischer Energie (E) und zum Demodulieren eines Datensignals (DS), aufweisend:
ein Netzteil (NT) zum Empfang elektrischer Energie (E) und eines modulierten Datensignals (DS) mittels einer Stromleitung; und
ein an das Netzteil (NT) gekoppeltes Kommunikationsmodul (KM), welches das auf die Stromleitung modulierte Datensignal (DS) demoduliert,
**dadurch gekennzeichnet, dass**
das Netzteil (NT) konfiguriert ist, das Datensignal zu empfangen und zusammen mit elektrischer Energie für ein Endgerät (EG) an das Kommunikationsmodul durchzureichen,
das Kommunikationsmodul (KM) zwischen dem Netzteil (NT) und dem stromabnehmenden Endgerät (EG) als Weiche ausgeführt ist, und konfiguriert ist, das modulierte Datensignal der Stromleitung zu entnehmen,
das Kommunikationsmodul (KM) die elektrische Energie für das Endgerät (EG) vom Netzteil (NT) empfängt und dem Endgerät (EG) zur Verfügung stellt, und
das Netzteil (NT) und das Kommunikationsmodul (KM) separat austauschbar ausgeführt sind.

2. Netzteilanordnung nach Anspruch 1, wobei das Datensignal (DS) einem Ethernet Standard entspricht.

3. Netzteilanordnung nach einem der Ansprüche 1 oder 2, wobei das Netzteil (NT), das Kommunikationsmodul (KM), und das stromabnehmende Endgerät (EG) in einem Gehäuse integriert sind.

4. Netzteilanordnung nach einem der vorherigen Ansprüche, wobei eine Steuereinheit das stromabnehmende Endgerät (EG) mittels des Datensignals (DS) ansteuert.

5. Netzteilanordnung nach Anspruch 4, wobei die Steuereinheit durch mindestens einen Server gebildet wird.

6. Netzteilanordnung nach einem der vorherigen Ansprüche, wobei das stromabnehmende Endgerät (EG) als ein Element aus einer Gruppe von Endgeräten (EG) vorliegt, die Gruppe aufweisend: ein Radio, ein Fernsehgerät, einen Kühlschrank, eine Waschmaschine, einen Trockner, eine Lampe und einen Rechner, Wärmepumpe, Heizung, elektrische Rollläden.

7. Netzwerkanordnung zum Bereitstellen elektrischer Energie (E) und eines Datensignals (DS), aufweisend:
eine Netzteilanordnung gemäß einem der Ansprüche 1 bis 6,
eine Energiequelle konfiguriert zum Bereitstellen von elektrischer Energie (E) an die Netzteilanordnung über eine Stromleitung; und
ein Master PLC Modul in einem Kommunikationsmodul konfiguriert ein Datensignal (DS) auf die Stromleitung zu modulieren,
wobei das Kommunikationsmodul zwischen der Energiequelle und einer Mehrzahl an Steckdosen vorgesehen ist,
wobei das Master PLC Modul in einem Kommunikationsmodul in einem Home-Gateway vorgesehen ist, und
wobei die Netzteilanordnung mit einer der Steckdosen verbunden ist und konfiguriert ist, das Datensignal und die elektrische Energie von der Energiequelle zu empfangen und das Datensignal zusammen mit elektrischer Energie für ein Endgerät (EG) an ein Kommunikationsmodul (KM) der Netzteilanordnung durchzureichen.

8. Netzwerkanordnung nach Anspruch 7, wobei das Kommunikationsmodul (KM) mit einem Telekommunikationsnetz (T) verbunden ist.

9. Netzwerkanordnung nach einem der Ansprüche 7 oder 8, wobei das Kommunikationsmodul (KM) an einen Hausverteiler gekoppelt ist.

10. Netzwerkanordnung nach einem der Ansprüche 7 bis 9, wobei das Kommunikationsmodul (KM) in einen Verteilerkasten integriert ist.

11. Netzwerkanordnung nach einem der Ansprüche 7 bis 10, wobei die Mehrzahl an Steckdosen ortsfest in mindestens ein Gebäude eingebracht ist.

12. Netzwerkanordnung nach einem der Ansprüche 7 bis 11, wobei das Kommunikationsmodul (KM) als eine Weiche vorliegt.

13. Verfahren zur Aufnahme elektrischer Energie (E) und zum Demodulieren eines Datensignals (DS), aufweisend:
Empfangen elektrischer Energie (E) und eines modulierten Datensignals (DS) mittels einer Netzteilanordnung gemäß einem der Ansprüche 1 bis 7 und einer Stromleitung; und
Demodulieren des Datensignals (DS) mittels eines an ein Netzteil der Netzteilanordnung gekoppelten Kommunikationsmoduls (KM),
**dadurch gekennzeichnet, dass**
das Netzteil (NT) konfiguriert ist, das Datensignal zu empfangen und zusammen mit elektrischer Energie für ein Endgerät (EG) an das Kommunikationsmodul (KM) durchzureichen,
das Kommunikationsmodul (KM) zwischen dem Netzteil (NT) und dem stromabnehmenden Endgerät (EG) als Weiche ausgeführt ist, und konfiguriert ist, das modulierte Datensignal (DS) der Stromleitung zu entnehmen,
das Kommunikationsmodul (KM) elektrische Energie für das Endgerät (EG) vom Netzteil (NT) empfängt und dem Endgerät (EG) zur Verfügung stellt.

## Claims

1. Power supply assembly for consuming electrical energy (E) and for demodulating a data signal (DS), comprising:
a power supply unit (NT) for receiving electrical energy (E) and a modulated data signal (DS) by means of a power supply line, and
a communication module (KM) coupled to the power supply unit (NT) and demodulating the data signal (DS) modulated on the power supply line,
**characterized in that**
the power supply unit (NT) is configured to receive the data signal and transmit it together with electrical energy for a terminal (EG) to the communication module,
the communication module (KM) is formed between the power supply unit (NT) and the energy-consuming terminal (EG) as switch and is configured to draw the modulated data signal from the power supply line,
the communication module (KM) receives the electrical energy for the terminal (EG) from the power supply unit (NT) and makes it available to the terminal (EG), and
the power supply unit (NT) and the communication module (KM) are configured so as to be separately replaceable.

2. The power supply assembly according to claim 1, wherein the data signal (DS) corresponds to an Ethernet standard.

3. The power supply assembly according to any one of claim 1 or 2, wherein the power supply unit (NT), the communication module (KM) and the power-consuming terminal (EG) are integrated in a housing.

4. The power supply assembly according to any one of the preceding claims, wherein a control unit controls the energy-consuming terminal (EG) by means of the data signal (DS).

5. The power supply assembly according to claim 4, wherein the control unit is formed by at least one server.

6. The power supply assembly according to any one of the preceding claims, wherein the power-consuming terminal (EG) is present as an element from a group of terminals (EG), the group comprising: a radio, a TV-set, a refrigerator, a washing machine, a dryer, a lamp and a computer, heat pump, heater, electrical roller shutters.

7. Network assembly for providing electrical energy (E) and a data signal (DS), comprising:
a power supply assembly according to any one of claims 1 to 6,
an energy source configured to provide electrical energy (E) to the power supply assembly via a power supply line and
a master PLC module in a communication module, configured to modulate a data signal (DS) to the power supply line,
wherein the communication module is provided between the energy source and a plurality of sockets,
wherein the master PLC module is provided in a communication module in a home gateway, and
wherein the power supply assembly is connected to one of the sockets and configured to receive the data signal and the electrical energy from the energy source and transmit the data signal together with electrical energy for a terminal (EG) to a communication module (KM) of the power supply assembly.

8. The network assembly according to claim 7, wherein the communication module (KM) is connected to a telecommunication network (T).

9. The network assembly according to any one of claim 7 or 8, wherein the communication module (KM) is coupled to a building distributor.

10. The network assembly according to any one of claims 7 to 9, wherein the communication module (KM) is integrated in a distributor box.

11. The network assembly according to any one of claims 7 to 10, wherein the plurality of sockets is provided in a stationary manner in at least one building.

12. The network assembly according to any one of claims 7 to 11, wherein the communication module (KM) is present as a switch.

13. A method for consuming electrical energy (E) and for demodulating a data signal (DS), comprising:
receiving electrical energy (E) and a modulated data signal (DS) by means of a power supply assembly according to any one of claims 1 to 7 and a power supply line, and
demodulating the data signal (DS) by means of a communication module (KM) coupled to a power supply unit of the power supply assembly,
**characterized in that**
the power supply unit (NT) is configured to receive the data signal and transmit it together with electrical energy for a terminal (EG) to the communication module (KM),
the communication module (KM) is formed between the power supply unit (NT) and the electricity-consuming terminal (EG) as switch and is configured to draw the modulated data signal (DS) from the power supply line,
the communication module (KM) receives electrical energy for the terminal (EG) from the power supply unit (NT) and makes it available to the terminal (EG).

## Revendications

1. Dispositif de bloc d'alimentation pour l'absorption d'énergie électrique (E) et pour la démodulation d'un signal de données (DS), comprenant :
un bloc d'alimentation (NT) destiné à recevoir de l'énergie électrique (E) et un signal de données (DS) modulé au moyen d'une ligne de courant ; et
un module de communication (KM) relié au das bloc d'alimentation (NT) et démodulant le signal de données (DS) modulé sur la ligne de courant,
**caractérisé en ce que**
le bloc d'alimentation (NT) est configuré pour recevoir le signal de données et transférer celui-ci au module de communication conjointement avec de l'énergie électrique pour un terminal (EG),
le module de communication (KM) est réalisé comme aiguillage entre le bloc d'alimentation (NT) et le terminal (EG) absorbeur de courant, et est configuré pour prélever le signal de données modulé de la ligne de courant,
le module de communication (KM) reçoit du bloc d'alimentation (NT) l'énergie électrique pour le terminal (EG) et fournit celle-ci au terminal (EG), et
le bloc d'alimentation (NT) et le module de communication (KM) sont réalisés de manière à être remplaçables séparément.

2. Dispositif de bloc d'alimentation selon la revendication 1, où le signal de données (DS) satisfait à une norme Ethernet.

3. Dispositif de bloc d'alimentation selon la revendication 1 ou la revendication 2, où le bloc d'alimentation (NT), le module de communication (KM) et le terminal (EG) absorbeur de courant sont intégrés dans un boîtier.

4. Dispositif de bloc d'alimentation selon l'une des revendications précédentes, où une unité de commande commande le terminal (EG) absorbeur de courant au moyen du signal de données (DS).

5. Dispositif de bloc d'alimentation selon la revendication 4, où l'unité de commande est formée par au moins un serveur.

6. Dispositif de bloc d'alimentation selon l'une des revendications précédentes, où le terminal (EG) absorbeur de courant se présente comme un élément d'un groupe de terminaux (EG), ledit groupe comprenant : une radio, un téléviseur, un réfrigérateur, un lave-linge, un séchoir, une lampe et un ordinateur, une pompe à chaleur, un chauffage, des volets roulants électriques.

7. Dispositif de réseau pour la fourniture d'énergie électrique (E) et d'un signal de données (DS), comprenant :
un dispositif de bloc d'alimentation selon l'une des revendications 1 à 6,
une source d'énergie configurée pour fournir de l'énergie électrique (E) au dispositif de bloc d'alimentation via une ligne de courant ; et
un module PLC maître dans un module de communication, configuré pour moduler un signal de données (DS) sur la ligne de courant,
où le module de communication est prévu entre la source d'énergie et une pluralité de prises de courant,
où le module PLC maître est prévu dans un module de communication d'une passerelle domestique, et
où le dispositif de bloc d'alimentation est relié à une des prises de courant et est configuré pour recevoir le signal de données et l'énergie électrique de la source d'énergie, et
pour transférer le signal de données à un module de communication (KM) du dispositif de bloc d'alimentation conjointement avec l'énergie électrique pour un terminal (EG).

8. Dispositif de réseau selon la revendication 7, où le module de communication (KM) est relié à un réseau de télécommunications (T).

9. Dispositif de réseau selon la revendication 7 ou la revendication 8, où le module de communication (KM) est relié à un répartiteur domotique.

10. Dispositif de réseau selon l'une des revendications 7 à 9, où le module de communication (KM) est intégré à une boîte de distribution.

11. Dispositif de réseau selon l'une des revendications 7 à 10, où la pluralité de prises de courant est installée fixement dans au moins un bâtiment.

12. Dispositif de réseau selon l'une des revendications 7 à 11, où le module de communication (KM) se présente comme un aiguillage.

13. Procédé d'absorption d'énergie électrique (E) et de démodulation d'un signal de données (DS), comprenant :
la réception d'énergie électrique (E) d'un signal de données (DS) modulé au moyen du dispositif de bloc d'alimentation selon l'une des revendications 1 à 7 et d'une ligne de courant ; et
la démodulation du signal de données (DS) au moyen d'un module de communication (KM) relié à un bloc d'alimentation du dispositif de bloc d'alimentation,
**caractérisé en ce que**
le bloc d'alimentation (NT) est configuré pour recevoir le signal de données et transférer celui-ci au module de communication conjointement avec de l'énergie électrique pour un terminal (EG),
le module de communication (KM) est réalisé comme aiguillage entre le bloc d'alimentation (NT) et le terminal (EG) absorbeur de courant, et est configuré pour prélever le signal de données (DS) modulé de la ligne de courant,
le module de communication (KM) reçoit du bloc d'alimentation (NT) l'énergie électrique pour le terminal (EG) et fournit celle-ci au terminal (EG).
